Europäisches Patentamt

European Patent Office

Office européen des brevets

(11) Numéro de publication: **0 408 493 A1**

# DEMANDE DE BREVET EUROPEEN

(21) Numéro de dépôt: 90810479.7

(22) Date de dépôt: 26.06.90

(51) Int. Cl.5: **H02H 7/093**

(30) Priorité: 30.06.89 FR 8908810

(43) Date de publication de la demande:
16.01.91 Bulletin 91/03

(84) Etats contractants désignés:
BE CH DE GB LI NL SE

(71) Demandeur: SOMFY
8, Avenue de Margencel
F-74300 Cluses(FR)

(72) Inventeur: Forster, Didier
Sperber Weg 5
D-7400 Tübigen(DE)
Inventeur: Mugnier, Daniel
Vers le Nant
F-74700 Domancy(FR)
Inventeur: Häring, Rolf
Fritzenrain, 5
D-7406 Mössingen(DE)

(74) Mandataire: Meylan, Robert Maurice et al
c/o BUGNION S.A. 10, route de Florissant
Case Postale 375
CH-1211 Genève 12 - Champel(CH)

(54) Dispositif d'arrêt d'un moteur asynchrone monophasé à condensateur.

(57) Le dispositif est destiné à arrêter un moteur asynchrone monophasé (1) comprenant un condensateur de déphasage (C1) lorsque la charge sur le moteur atteint une valeur déterminée., Le dispositif d'arrêt comprend un circuit (2) délivrant une tension continue homothétique de la tension aux bornes du condensateur de déphasage (C1), un circuit (4) délivrant au moins une tension constante de référence et un circuit comparateur (3) comparant ces deux tensions et délivrant un signal d'arrêt lorsque la tension continue homothétique devient égale ou inférieure à la tension de référence.

FIG.1

## DISPOSITIF D'ARRÊT D'UN MOTEUR ASYNCHRONE MONOPHASÉ À CONDENSATEUR.

L'invention a pour objet un dispositif d'arrêt d'un moteur asynchrone monophasé comprenant un condensateur de déphasage pour l'obtention d'un champ tournant, arrêtant le moteur lorsque la charge sur le moteur atteint une valeur déterminée, c'est-à-dire lorsque la vitesse diminue en-dessous d'une certaine valeur en raison d'une surcharge et comprenant à cet effet un circuit délivrant une tension continue homothétique de la tension aux bornes du condensateur de déphasage du moteur.

Un tel dispositif est particulièrement utile comme dispositif de sécurité pour arrêter le moteur d'une installation dans laquelle la charge entraînée par le moteur risque de rencontrer un obstacle avec les risques d'écrasement ou de détérioration de l'installation que cela comporte. On citera à titre d'exemple les portes, volets et stores motorisés.

On connaît, du brevet DE 27 26 696, un dispositif d'arrêt tirant parti des observations faites que la tension aux bornes du condensateur de déphasage varie avec la vitesse du moteur pour stopper le moteur lorsque la tension aux bornes du condensateur de déphasage tombe en-dessous d'une certaine valeur correspondant à une chute de la vitesse du moteur en raison d'une surcharge. Dans ce dispositif la tension aux bornes du condensateur est appliquée à un pont redresseur délivrant un courant quasi continu appliqué à un relais à travers une diode Zener.

Un tel dispositif pose des problèmes pratiques d'utilisation, car la dispersion de fabrication des relais ne permet pas d'obtenir un courant de collage/décollage identique pour tous les relais, ce qui nécessite l'étalonnage de chaque dispositif, d'une part, au moyen d'une résistance variable associée au relais et, d'autre part, au moyen de l'une des résistances d'un diviseur de tension utilisé pour équilibrer le pont redresseur. Une fois étalonné, le dispositif ne permet pas une grande précision de déclenchement, car cette précision est liée à celle du relais, qui est très limitée, et à la température instantanée du relais.

La présente invention a pour but de réaliser un dispositif assurant un arrêt du moteur avec une précision et une fiabilité élevées.

Le dispositif d'arrêt selon l'invention est caractérisé en ce qu'il comprend un circuit délivrant au moins une tension constante de référence et un circuit comparateur comparant ces deux tensions et délivrant un signal d'arrêt lorsque la tension continue homothétique de la tension aux bornes du condensateur de déphasage devient égale ou inférieure à la tension de référence.

L'utilisation d'une tension de référence et d'un comparateur permet d'obtenir une grande précision, car la précision du comparateur peut être élevée et le signal d'arrêt qu'il délivre n'agit pas directement sur un relais, mais sur un circuit électronique approprié.

Dans une forme particulière de réalisation, la tension de référence est obtenue au moyen d'un circuit relié comme le moteur au réseau et susceptible de fournir une tension continue et homothétique de celle du réseau, de façon a tenir compte des variations de la tension du réseau, ce qui augmente encore la précision du déclenchement.

Le dessin annexé représente, à titre d'exemple, trois formes d'exécution du dispositif selon l'invention.

La figure 1 représente le schéma électrique d'une première forme d'exécution.

La figure 2 représente le schéma électrique d'une deuxième forme d'exécution.

La figure 3 représente le schéma électrique d'une troisième forme d'exécution.

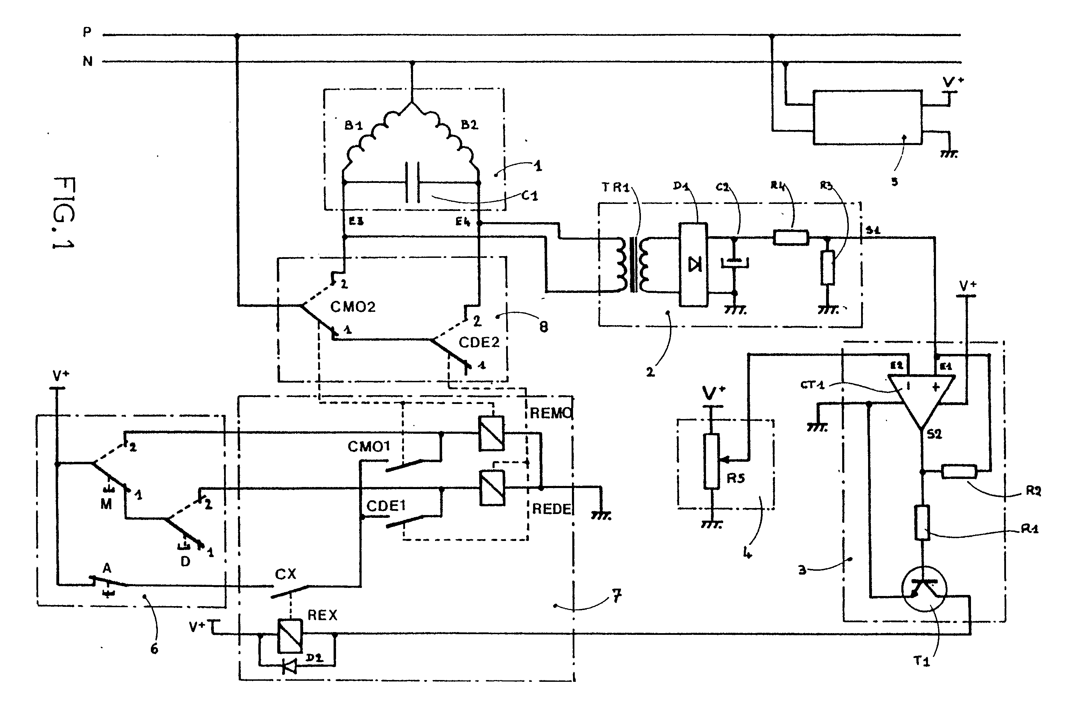

La figure 1 représente schématiquement un moteur asynchrone monophasé 1 équipé de deux enroulements B1 et B2 correspondant respectivement à deux sens de, rotation et d'un condensateur de déphasage C1, branché en permanence, en série avec l'enroulement auxiliaire du moteur et assurant l'obtention d'un champ tournant. Ce moteur est alimenté par le réseau indiqué par les lettres P et N. Aux bornes du condensateur C1 est branché un circuit 2 délivrant une tension continue homothétique de la tension aux bornes du condensateur C1. Cette tension continue homothétique est appliquée à un circuit comparateur 3 auquel est également appliquée une tension continue de référence fournie par un circuit 4 alimenté par le réseau au moyen d'une alimentation stabilisée 5. Le moteur 1 est commandé par un circuit de commande 6 à travers un circuit 7 de gestion des commandes émanant des circuits 3 et 6 et d'un circuit interface 8.

Le circuit 2 délivrant une tension continue homothétique de la tension aux bornes du condensateur C1 comprend un transformateur Tr1 auquel est appliquée la tension aux bornes du condensateur C1, un pont redresseur D1, un condensateur de filtrage C2 et un diviseur de tension constitué des résistances R3, R4.

Le circuit comparateur comprend un comparateur de tension CT1 (intégré), un transistor T1, une résistance d'hystérésis R2 et une résistance R1 de polarisation du transistor T2.

Le circuit 4 est constitué d'une résistance variable R5.

Le circuit de commande 6 comprend deux boutons poussoirs M et D à contact momentané normalement ouvert, et un bouton d'arrêt A à contact momentané normalement fermé.

Les circuits 7 et 8 comprennent un relais "montée" REMO commandant les contacts montés CMO1 et CMO2, un relais "descente" REDE commandant les contacts "descente" CDE1 et CDE2, un relais d'arrêt REX de commande du contact d'arrêt CX et une diode de roue libre D2 absorbant l'énergie générée par la coupure du relais REX.

Dans l'application à un store ou volet roulant l'enroulement B1 correspond à la montée et l'enroulement B2 à la descente.

La tension aux bornes du condensateur de déphasage C1 varie selon une courbe régulière décroissante et de façon inverse à la charge appliquée sur l'axe du moteur. Le circuit 2 permet d'obtenir à la sortie S1 une tension continue variant proportionnellement à la tension d'entrée. Le circuit 2 est calculé de telle sorte que sa tension de sortie puisse varier d'une valeur supérieure à la tension de référence, lorsque la tension d'entrée est à sa valeur maximale, à une valeur inférieure à la tension, de référence, lorsque la tension d'entrée est à sa valeur minimale. Le circuit 4 permet d'ajuster la tension de référence.

Le comparateur CT1 permet de délivrer une tension à sa sortie S2 lorsque la tension appliquée à son entrée E1 est supérieure à celle appliquée en E2 et aucune tension dans le cas contraire. La tension à sa sortie S2 a pour effet de polariser la base du transistor T1 et de le rendre conducteur.

Lorsque, par exemple, l'utilisateur actionne le contact "montée" M, le relais REMO est alimenté et ses contacts CMO1 CMO2 se ferment. L'enroulement B1 du moteur est alimenté et l'arbre du moteur est entraîné dans un premier sens de rotation. Si, lors de cette rotation, le moteur ne subit pas de charge, la tension aux bornes du condensateur C1 est maximale et il en est de même de la tension à l'entrée du circuit 2. La tension à la sortie S2 appliquée en E1 est supérieure à la tension de référence appliquée en E2 et une tension apparaît à la sortie S2 du comparateur. Le transistor T1 devient conducteur et le relais REX est alimenté. Son contact CX se ferme, permettant par l'intermédiaire du contact CMO1, l'auto-alimentation du relais REMO et donc celle du moteur.

Lorsqu'une charge apparaît sur l'arbre du moteur 1, sa vitesse diminue et la tension aux bornes du condensateur C1 décroît et il en est de même de la tension à la sortie S1 du circuit 2. Lorsque la charge sur le moteur atteint une certaine valeur, la tension appliquée en E1 sur le comparateur devient inférieur à la tension de référence appliquée en E2 et la tension en S2 disparaît, entraînant le blocage du transistor T1, ce qui coupe l'alimentation du relais REX. Le contact CX s'ouvre et l'alimentation du relais REMO est coupée. Les contacts CMO2 et CMO1 s'ouvrent et le moteur s'arrête.

La charge appliquée sur l'arbre du moteur peut résulter d'une butée de fin de course ou d'un obstacle. Dans le premier cas, le fonctionnement peut être repris en actionnant le bouton "descente" D et le déroulement s'effectue d'une manière analogue à celle décrite, l'enroulement B2 étant alors alimenté, ainsi que le relais REDE agissant sur les contacts CEDE1 et CEDE 2, le moteur étant entraîné dans l'autre sens de rotation.

Dans le second cas, l'obstacle étant éliminé, le fonctionnement peut être repris en actionnant indifféremment le bouton M ou D.

Au moyen de la résistance variable R5 du circuit 4, on peut ajuster la tension en E2, c'est-à-dire régler avec précision le niveau de charge provoquant l'arrêt du moteur.

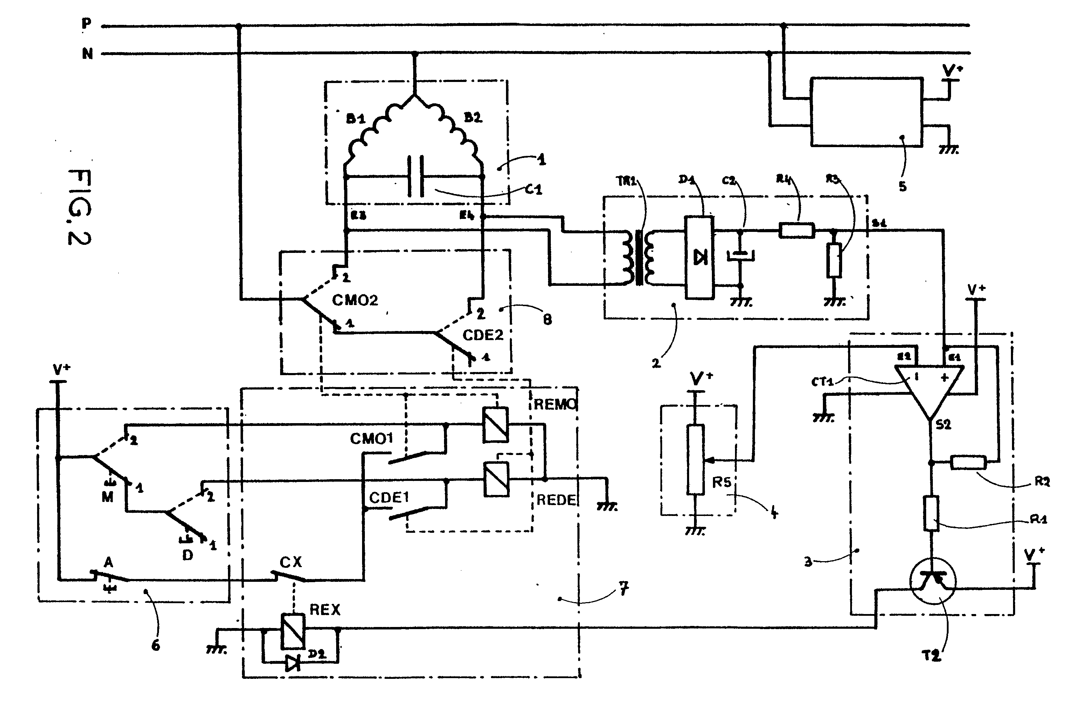

La deuxième forme d'exécution, représentée à la figure 2, diffère de la première forme d'exécution par l'utilisation d'un transistor PNP T2 à la place d'un transistor NPN, dans le circuit comparateur 3, et par le fait que le contact CX du relais est un contact de repos.

Ainsi, lorsque le moteur est alimenté sous charge, on a à la sortie S2 du comparateur CT1 une tension polarisant la base du transistor T2 et le bloquant. Le relais REX n'est pas alimenté et le contact CX reste fermé assurant l'auto-alimentation du moteur 1 comme précédemment décrit. Lorsqu'une surcharge apparaît la tension en S2 disparaît, ce qui entraîne la saturation de la base du transistor T2 en le rendant conducteur. Le relais REX est alimenté et son contact CX s'ouvre en provoquant l'arrêt du moteur comme décrit précédemment. Pour le reste le fonctionnement est le même que celui de la première forme d'exécution.

Cette deuxième forme d'exécution présente l'avantage que le relais REX n'est alimenté que pour réaliser l'arrêt du moteur.

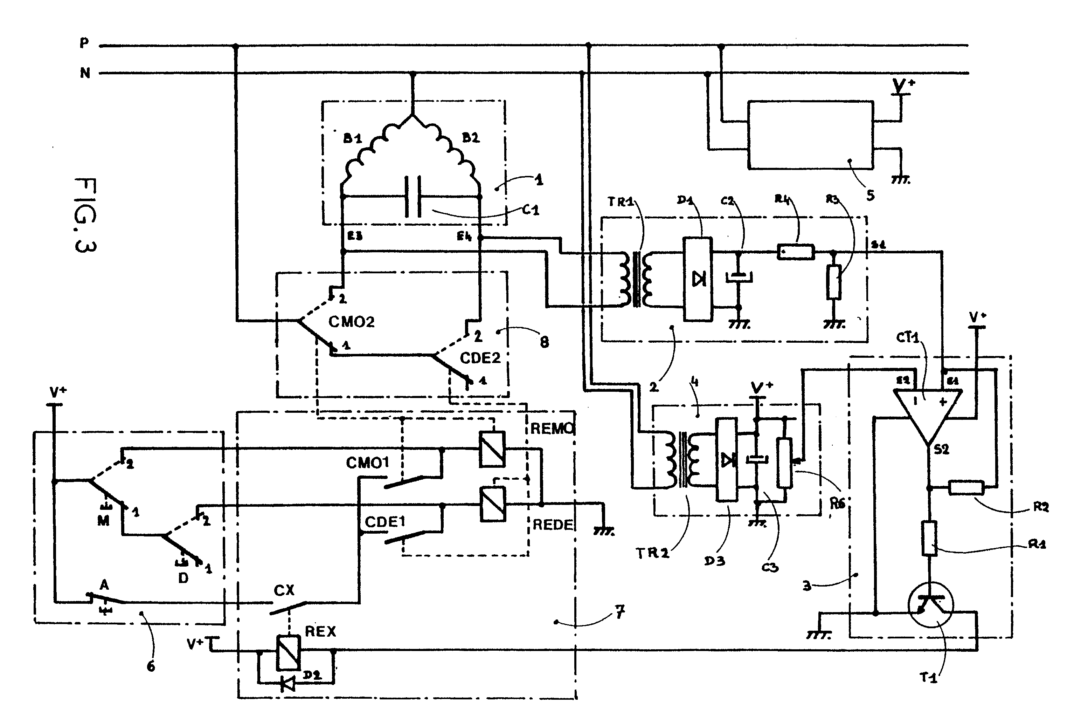

La tension du réseau peut subir des variations qui se répercutent sur la tension aux bornes du condensateur de déphasage C1 et par conséquent sur la tension appliquée à l'entrée E1 du comparateur CT1. Comme d'autre part la tension continue stabilisée délivrée par le circuit d'alimentation 5 ne suit pas les variations de tension du réseau, la tension de référence ne varie pas parallèlement à la tension mesurée, de telle sorte que les variations de tension du réseau ont pour conséquence une variation du point d'arrêt du moteur. Il est possible de remédier à cet inconvénient en asservissant la tension de référence à la tension du réseau de telle sorte que la tension de référence soit une tension homothétique de celle du réseau. La figure 3 représente un exemple de réalisation de cet asservissement applicable aux première et deuxième formes d'exécution.

Le circuit 4' délivrant la tension de référence comprend un transformateur Tr2 auquel est appliquée la tension du réseau, un pont redresseur D3, un condensateur de filtrage C3 et une résistance variable R6 permettant de régler la tension de référence. La tension de référence ainsi obtenue est homothétique de la tension du réseau et varie par conséquent parallèlement à la tension mesurée, de sorte que pour une même charge le rapport des tensions en E1 et E2 reste constant quelle que soit la tension du réseau.

## Revendications

1. Dispositif d'arrêt d'un moteur asynchrone monophasé (1) comprenant un condensateur de déphasage (C1) pour l'obtention d'un champ tournant, arrêtant le moteur lorsque la charge sur le moteur atteint une valeur déterminée et comprenant à cet effet un circuit (2) délivrant une tension continue homothétique de la tension aux bornes du condensateur de déphasage (C1) du moteur, caractérisé en ce qu'il comprend un circuit (4) délivrant au moins une tension constante de référence et un circuit comparateur (3) comparant ces deux tensions et délivrant un signal d'arrêt lorsque la tension continue homothétique devient égale ou inférieure à la tension de référence.

2. Dispositif selon la revendication 1 pour un moteur alimenté par le réseau, caractérisé en ce que le circuit (4') délivrant la tension de référence est asservi au réseau de manière à délivrer une tension suivant les variations de la tension du réseau.

3. Dispositif selon la revendication 1 ou 2, caractérisé par le fait que le circuit comparateur (2) est associé à un élément de commutation électronique (T1 ; T2) contrôlant l'alimentation en courant d'un relais (REX) contrôlant l'alimentation du moteur.

4. Dispositif selon la revendication 3, caractérisé en ce que ledit relais (REX) est excité lorsque le moteur est alimenté.

5. Dispositif selon la revendication 3, caractérisé en ce que ledit relais (REX) est excité lors de l'arrêt du moteur par le dispositif d'arrêt.

FIG.1

FIG. 2

FIG. 3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| Y,D | DE-A-2726696 (NIEFNECKER A.) <br> * page 9, alinéa 2 * <br> --- | 1-5 | H02H7/093 |
| Y | DE-C-3130035 (NIEFNECKER A.) <br> * abrégé * <br> --- | 1-5 | |
| Y | US-A-4196462 (GENERAL ELECTRIC COMPANY) <br> * abrégé * <br> ----- | 1-5 | |

**DOMAINES TECHNIQUES RECHERCHES (Int. Cl.5 )**

H02H

Le présent rapport a été établi pour toutes les revendications

| Lieu de la recherche | Date d'achèvement de la recherche | Examinateur |
|---|---|---|
| LA HAYE | 04 OCTOBRE 1990 | LIBBERECHT L.A. |